# EUROPEAN PATENT APPLICATION

(11) **EP 4 420 911 A1**
(43) Date of publication of application: **28.08.2024**
(21) Application number: 23158404.6
(22) Date of filing: 24.02.2023
(51) Int. Cl.: B60K 35/00

(54) **CONTROL DEVICE AND METHOD FOR ADJUSTING A DIGITAL ASSISTANT OF A VEHICLE**

(71) Applicant: Bayerische Motoren Werke Aktiengesellschaft, 80809 München (DE)
(72) Inventor: Zaki, Tarek, 81829 München (DE)

(57) **Abstract**

A control device (1) for adjusting a digital assistant of a vehicle (10) in a driving mode and a non-driving mode of the vehicle (10) is provided. The control device (1) is configured to receive (S1) sensor data from at least one sensor (2) of the vehicle (10) in the driving mode or the non-driving mode, determine (S2) an event based on the received sensor data using at least one lookup table, retrieve (S3) an emotion associated with the determined event from the at least one lookup table, adjust (S4) at least one acoustic parameter of the digital assistant based on the retrieved emotion, and control (S5) the digital assistant to express the retrieved emotion by providing a voice massage associated with the retrieved emotion, using the adjusted at least one acoustic parameter.

## Description

The present disclosure relates to a control device for adjusting a digital assistant of a vehicle in a driving mode and a non-driving mode of the vehicle, a vehicle comprising the control device, and/or a method for adjusting a digital assistant of a vehicle in a driving mode and a non-driving mode of the vehicle. Additionally, or alternatively, the present disclosure relates to a computer program and/or a computer-readable medium comprising instructions which, when executed by a computer, cause the computer to at least partially carry out the method.

It is known to implement digital assistants (also known as, e.g., (intelligent) virtual assistants) in vehicles for interacting with users and for performing tasks or services based on commands or questions by the users. Known digital assistants may be adjustable to reflect emotions when interacting with the users.

Document US 2021/0291841 A1 describes an information processing device which includes a controller that is configured to acquire driving behavior information as an indication of prudence of a driver in driving a vehicle, acquire a vehicle avatar corresponding to the vehicle, the vehicle avatar having a basic personality set thereto according to information about the vehicle, create a message according to the basic personality of the vehicle avatar based on the driving behavior information, and output the message, that is created, as an utterance of the vehicle avatar.

Document US 2011/0083075 A1 describes an emotive advisory system for use by one or more occupants of an automotive vehicle. The system includes a directional speaker array, and a computer. The computer is configured to determine an audio direction, and output data representing an avatar for visual display. The computer is further configured to output data representing a spoken statement for the avatar for audio play from the speaker array such that the audio from the speaker array is directed in the determined audio direction. A visual appearance of the avatar and the spoken statement for the avatar convey a simulated emotional state.

Document CN 113525083 A describes a content output method applied to a vehicle, wherein the method comprises detecting environmental information of the vehicle in a current state, comparing the environmental information of the vehicle in the current state with the historical vehicle using information of the vehicle to obtain a comparison result, and outputting emotional content matched with the environmental information of the vehicle in the current state under the condition that the comparison result shows that the vehicle meets the content output condition.

Document US 2013/0054090 A1 describes an emotion-based vehicle service system for safe driving, which includes a multi-emotion sensor node configured to sense emotion information of a driver and passenger in a vehicle and condition information of the vehicle. The emotion-based vehicle service system further includes an emotion cognition processing apparatus configured to analyze sensing information provided from the multi-emotion sensor node to generate emotion cognition information, and a safe driving service apparatus configured to provide an emotion-based safe driving service depending on the emotion cognition information.

In view of this prior art, the object of the present disclosure is to disclose a device and/or a method, each of which is suitable for enriching the prior art.

The object is solved by the features of the independent claims. The dependent claims provide optional further implementations of the disclosure.

Accordingly, the object is solved by a control device for adjusting a digital assistant of a vehicle in a driving mode and a non-driving mode of the vehicle.

The control device is configured to receive sensor data from at least one sensor of the vehicle in the driving mode or the non-driving mode, and determine an event based on the received sensor data using at least one lookup table.

The control device is configured to retrieve an emotion associated with the determined event from the at least one lookup table, and adjust at least one acoustic parameter of the digital assistant based on the retrieved emotion.

The control device is configured to control the digital assistant to express the retrieved emotion by providing a voice massage associated with the retrieved emotion, using the adjusted at least one acoustic parameter.

The digital assistant may be also called an intelligent virtual assistant, software agent and/or a digital persona of the vehicle. The digital assistant may be configured for performing tasks or services in the vehicle based on commands or questions by a user (e.g., a driver and/or a passenger).

The at least one acoustic parameter may be adjusted to reflect (or at least support) the retrieved emotion and/or such that a user may identify the retrieved emotion.

The voice message may be provided to reflect (or at least support) the retrieved emotion and/or such that a user may identify the retrieved emotion.

In the driving mode, the vehicle may be in motion, an engine of the vehicle may be activated and/or a torque may be transmitted to wheels of the vehicle.

In the non-driving mode, the vehicle may be parked, the engine may be deactivated and/or no torque may be transmitted to the wheels of the vehicle.

The control device or control unit may be part of or represent a driving assistance system. The control device may be, e.g., an electronic control unit (ECU). The electronic control unit may be an intelligent processor-controlled unit which can communicate with other modules, e.g., via a central gateway (CGW), and which, if necessary, may form (part of) the vehicle electrical system via field buses such as the CAN bus, LIN bus, MOST bus, FlexRay and/or via the automotive Ethernet, e.g., together with telematics control units and/or an environment sensor system.

It is possible that the control device controls functions relevant to the driving behavior of the (motor) vehicle, such as the steering, the engine control, the power transmission, and/or the braking system. In addition, driver assistance systems such as a parking assistant, adaptive cruise control (ACC), lane departure warning, lane change assistant, traffic sign recognition, light signal recognition, approach assistant, night vision assistant, and/or intersection assistant may be controlled by the control device.

The control device described above provides several advantages. Among other things, the control device gives them vehicle expressed and human-understood emotions (and feelings) to interact seamlessly with a user, such as a driver and/or a passenger. Advantageously, the present disclosure makes use of sensors of the vehicle to change the vehicle's (social) emotion automatically and make the emotion detectable and understandable by the driver and/or the passengers, wherein the emotion can be changed in the driving mode and the non-driving mode of the vehicle.

Possible further implementations of the control device described herein are explained in detail below.

The at least one sensor may comprise a 3-axis acceleration sensor, an in-cabin and/or external temperature sensor, a rain sensor, an in-cabin air quality sensor, a sensor associated with a side and/or roof window opener device, a fuel or battery state sensor, a seat belt status sensor, a speed sensor, external cameras, an external microphone, and/or a global positioning system location sensor.

The at least one lookup table may comprise at least one of the following events.

An event may be that the vehicle is inclined, which may be determined based on sensor data of the 3-axis acceleration sensor (of the at least one sensor) and associated with the emotion "irritated".

An event may be raining weather, which may be determined based on sensor data of the in-cabin and/or external temperature sensor and/or rain sensor (of the at least one sensor) and associated with the emotion "happy", "sad" and/or "fearful".

An event may be hot weather, which may be determined based on sensor data of the in-cabin and/or external temperature sensor (of the at least one sensor) and associated with the emotion "tired" and/or "frustrated".

An event may be bad air quality, which may be determined based on sensor data of the in-cabin air quality sensor (of the at least one sensor) and associated with the emotion "tired" and/or "sad".

An event may be an open window while raining, which may be determined based on sensor data of the rain sensor (of the at least one sensor) and the sensor associated with a side and/or roof window opener device and associated with the emotion "irritated".

An event may be low fuel or battery level, which may be determined by the fuel or battery state sensor (of the at least one sensor) and associated with the emotion "tired", "confused" and/or "irritated".

An event may be an open seat belt, which may be determined by the seat belt status sensor (of the at least one sensor) and associated with the emotion "tired", "confused" and/or "irritated".

An event may be an abrupt strong break to stop the vehicle, which may be determined based on sensor data of the 3-axis acceleration sensor (of the at least one sensor) and associated with the emotion "alerted".

An event may be an exceeding speed limit, which may be determined based on sensor data of the speed sensor (of the at least one sensor) in combination with the external cameras and/or and a navigation system and associated with the emotion "alerted" and/or "irritated".

The event may be hearing a police siren and/or a horn of another vehicle, which may be determined based on sensor data of the external microphone (of the at least one sensor) and associated with the emotion "alerted" and/or "afraid".

The at least one acoustic parameter may comprise a speech rate, a pitch, an intensity, a voice quality and/or an articulation.

The control device may be further configured to adjust at least one visual parameter of the digital assistant based on the retrieved emotion. The digital assistant may be controlled to provide the voice massage in combination with a visual representation associated with the retrieved emotion, using the adjusted at least one acoustic parameter and the adjusted at least one visual parameter. Advantageously, the digital assistant may be visually adjusted, additionally to audibly adjusted, to reflect the retrieved emotion, thereby further helping the user to understand the retrieved emotion.

The control device may be further configured to receive a positive or negative feedback from a user via an input device, optionally an in-cabin touchscreen and/or a mobile communication device, in response to the provided voice massage. The control device may be further configured to adapt subsequent adjusting of the digital assistant using adaptive machine learning.

The adjusted digital assistant may be provided in a cabin of the vehicle and additionally by a mobile communication device.

The control device may be configured to communicate with at least one speaker and optionally at least one display arranged in the cabin of the vehicle for providing the adjusted digital assistant.

The control device may be configured to communicate with the mobile communication device for additionally providing the adjusted digital assistant.

The foregoing may be summarized in other words and with respect to a possible more specific implementations of the disclosure as described below, wherein the following description is to be construed as not being limiting to the disclosure.

There are numerous ways to classify emotions. For instance, the following emotions may be digitally expressed by a vehicle: happiness (joy), surprise, anger, fear, disgust, sadness, neutral, rage, frustration, shyness, guilt, interest, embarrassment, confusion, irritation, tiredness, and/or any combination of said emotions.

With the help of vehicle sensory data and lookup tables, the digital persona of the vehicle (i.e., the digital assistant) may select among these emotions in response to a detected event.

Various events may be detected by sensors integrated in the vehicle and optionally additional signals of the vehicle. Each of the events may be associated with a potential social (and/or human) interpretation of the event and/or potential emotions that can be expressed by the digital persona of the vehicle. Additionally, each of the events may be associated with one or more expressions, words and/or jokes that can be said by the digital persona of the vehicle. The events may be categorized in different event categories. The events may be stored in at least one lookup table, together with the respective associated social interpretations, potential emotions and/or expressions.

An event category "sleep" may include events "parked inclined" (e.g., when one wheel of the vehicle is wrongly on a pedestrian street), "downloading content via the cloud to the in-vehicle entertainment system after leaving the vehicle", "parking and off-state for a short period of time in the evening" and/or "parking and off-state for a long period of time".

The event "parked inclined" may be determined by a 3-axis acceleration sensor and a vehicle power state, and may be associated with the social interpretation "wrong sleeping position", the emotion "irritated" (and/or "grumpy"), and/or the expression "Oh, what a night? Didn't sleep well - I've got a stiff neck from wrong sleeping position.".

The event "downloading content via the cloud to the in-vehicle entertainment system after leaving the vehicle" may be determined by a vehicle power state, an in-vehicle entertainment operation state and/or internet connectivity and activity, and may be associated with the social interpretation "wake-up for long working or thinking about the owner (friend)", the emotion "tired" (and/or "happy"), and/or the expression ""Hi, I kept thinking of you all night. Your favorite show is readily downloaded on the system for you. Enjoy the show!" or "Oh, that was a long night. I stayed late working to update the system."

The event "parking and off-state for a short period of time in the evening" may be determined by a duration of a vehicle power state and a determined day time, and may be associated with the social interpretation "sleeping for a short duration", the emotion "irritated" (and/or "tired"), and/or the expression "Oh, that was a rather short one. Can we sleep for just 5 minutes more?".

The event "parking and off-state for a long period of time" may be determined by a duration of a vehicle power state and a determined day time, and may be associated with the social interpretation "missing the partner", the emotion "happy" (and/or "fresh", "energetic") and/or "surprised", and/or the expression "Hi, missed you! Where have you been?".

The event category "weather" may include events "raining weather" (or "car wash"), "hot weather", "bad air quality" (in the cabin), "open windows while raining" and/or "foggy".

The event "raining weather" may be determined by an in-vehicle weather app, a temperature sensor and/or a rain sensor, and may be associated with the social interpretation "Maybe happy", "maybe fresh due to a shower" and/or "maybe fear of missing an appointment" (which may be combined with other events), the emotion "happy" (and/or "fresh", "energetic") or "sad" (and/or "fearful"), and/or the expression "Cool, that's refreshing." or "Oh, I'm running late. I need to drive carefully though.".

The event "hot weather" may be determined by an in-vehicle weather app and/or a temperature sensor, and may be associated with the social interpretation "sweating, tired or frustrated of the hot weather", the emotion "tired" (and/or "frustrated"), and/or the expression "Sigh. That's superhot. Can we detour to the next car wash? :D".

The event "bad air quality" may be determined by an in-cabin air quality sensor (determining an air quality of, e.g., PM2.5) and/or cloud data, and may be associated with the social interpretation "open windows or switch on ventilator/filter for fresh air", the emotion "tired" (and/or "sad"), and/or the expression "That's bad air, I need to refresh here.".

The event "open windows while raining" may be determined by a window opening level and a rain sensor, and may be associated with the social interpretation "in social context, human would need an umbrella; while vehicle needs to close the windows and the roof", the emotion "irritated", and/or the expression "Luckily, I'm not made of honey, I can survive these water droplets. Let's close the windows as its raining.".

The event "foggy" may be determined by a fog sensor, an in-vehicle weather app and/or cloud weather information, and may be associated with the social interpretation "in human context, when not seeing well, we need new eye glasses. In vehicle context, we need to switch the foggy lights", the emotion "irritated" and/or "frustrated", and/or the expression "I can hardly see, I probably need new eye glasses. Let's try with the fog lights first.".

An event category "fuel" may include an event "low fuel or battery level", which may be determined by a battery state sensor or a fuel state sensor, and may be associated with the social interpretation "in human context, feeling hungry", the emotion "tired", "confused" and/or "irritated", and/or the expression "Sigh. I need a bite of a big burger. Can we pass by the next tank station? Please!".

An event category "driving behavior" may include events "letting vehicle roll down a ramp", "someone warns my vehicle with a horn", "seat belt", "accident", "abrupt strong break to stop the vehicle", "too many occupants in the vehicle or full trunk with luggage", "when exceeding speed limit" and/or "elevating much above sea level" (e.g., driving on mountains).

The event "letting vehicle roll down a ramp" may be determined by a 3-axis acceleration sensor, a gas pedal sensor and a speedometer, and may be associated with the social interpretation "free fall", the emotion "happy" and/or "energetic", and/or the expression "Yahoo, that's cool, like a roller coaster. The last time we went to Disney was 3 years ago." (wherein the second sentence may require that the vehicle logs all destinations over a past period of time).

The event "someone warns my vehicle with a horn" may be determined by external microphones, and may be associated with the social interpretation "be cautious due to a warning", the emotion "alerted", and/or the expression "Aghhh, that was loud. I better take care in the future.".

The event "seatbelt" may be determined by a seat belt status sensor, and may be associated with the social interpretation "in human context, as if the person is not wearing a trousers belt", the emotion "irritated", and/or the expression "I better put my belt on, or otherwise my trousers would slip. We both don't want that. No, seriously, I strongly advise you to buckle the seatbelt properly for your own safety.".

The event "accident" may be determined by a 3-axis acceleration sensor, and may be associated with the social interpretation "accidents hurt", the emotion "tired" and/or "sad", and/or the expression "I'm not feeling well today. My back hurts due to the crash.".

The event "abrupt strong break to stop the vehicle" may be determined by a 3-axis acceleration sensor, and may be associated with the social interpretation "shock and sudden pause", the emotion "alerted", and/or the expression "That was fast. Luckily, you were attentive. Thanks for saving us.".

The event "too many occupants in the vehicle or full trunk with luggage" may be determined by wheels air pressure sensors, suspension sensors and/or an elevation (e.g., laser time-of-flight) sensor from the ground, and may be associated with the social interpretation "carrying a heavy load", the emotion "tired", and/or the expression (e.g., with a lower pitched voice) "Hi, I hope we're not going to drive a long way today with this heavy load.".

The event "when exceeding speed limit" may be determined by a speedometer, outer cameras, image processing of street signs, a navigation system and/or a global positioning system (GPS), and may be associated with the social interpretation "scared of making an accident or being caught by the radar", the emotion "alerted" and/or "irritated", and/or the expression "Slow down. Take care, we're driving much faster than the speed limits.".

The event "elevating much above sea level" may be determined by a pressure sensor and/or a GPS, and may be associated with the social interpretation "air pressure is lower at higher altitudes, and thus, breathing becomes more difficult", the emotion "tired", and/or the expression (e.g., with a voice breathing harder) "It must be a great view up there.".

An event category "events" may include events "social event" (e.g., Christmas), "appointment in the calendar" and/or "commuting for many days from work to home without going somewhere else".

The event "social event" may be determined by a calendar (connected with an in-vehicle entertainment system) and/or a clock, and may be associated with the social interpretation "happy moments", the emotion "surprised", "happy" and/or "energetic", and/or the expression (e.g., with a relatively higher voice) "Happy XMAAAAS. Where is my present? You know what, you are my present. ;)".

The event "appointment in the calendar" may be determined by a calendar (connected with an in-vehicle entertainment system) and/or a clock, and may be associated with the social interpretation "excited for an appointment later tonight at the open-air cinema", the emotion "happy" and/or "energetic", and/or the expression "Yohooo. Hi, good morning, I can't wait to go to the open-air cinema tonight.".

The event "commuting for many days from work to home without going somewhere else" may be determined by navigation system and/or GPS logs, and may be associated with the social interpretation "bored of only commuting between work and home for the past", the emotion "sad" and/or "frustrated", and/or the expression "Hi, it has been a while since we went out. How about going out tonight for dinner?".

An event category "navigation" may include events "when arriving home after a long ride", "arriving later as calendar start time" (or later than the navigation system initially forecasted) and/or "wishing you depending on destination".

The event "when arriving home after a long ride" may be determined by navigation system and/or GPS logs and/or a clock, and may be associated with the social interpretation "relieved after arriving home after a long day", the emotion "neutral", and/or the expression "Finally home. Was a long day.".

The event "arriving later as calendar start time" may be determined by a navigation system, a GPS and/or a calendar (connected with an in-vehicle entertainment system), and may be associated with the social interpretation "running late to the meeting", the emotion "sad", and/or the expression "Oh, sorry. We've arrived 5 minutes later to your appointment.".

The event "wishing you depending on destination" may be determined by a navigation system, a GPS and/or a calendar (connected with an in-vehicle entertainment system), and may be associated with the social interpretation "arriving at a hospital destination", the emotion "neutral", "happy" or "sad", and/or the expression "Wish you a quick recovery!".

An event category "media" may include an event "like certain kind of music", which may be determined by in-cabin microphones and/or an in-vehicle entertainment system, and may be associated with the social interpretation "feeling happy when listening to a favorite song", the emotion "happy" and/or "energetic", and/or the expression "I like this song. (Sing with the music a bit) ... Did you know that the singer is from Munich?".

An event category "camera" may include events "when you see another vehicle of the same manufacturer on the road", "when you see the vehicle of your partner on the road" and/or "a specific guest entering the vehicle".

The event "when you see another vehicle of the same manufacturer on the road" may be determined by outer cameras and image processing, and may be associated with the social interpretation "celebrating the manufacturer community on the road", the emotion "happy" and/or "energetic", and/or the expression "Ohhh, look at thaaaaat awesome car on the right. Hi five.".

The event "when you see the vehicle of your partner on the road" may be determined by outer cameras and image processing, and may be associated with the social interpretation "seeing your partner spontaneously on the road is a happy moment", the emotion "surprised", "happy" and/or "energetic", and/or the expression "Ohhh, look at thaaaaat on the right. Hi five.".

The event "a specific guest entering the vehicle" may be determined by in-cabin cameras, image processing, a pre-programmed person and a message by the driver (e.g., on a mobile app), and may be associated with the social interpretation "greet a specific user", the emotion "surprised", "happy" and/or "energetic", and/or the expression "Wow, that's Mark you've been talking to me about. Hi Mark, Tom admires your skiing skills.".

An event category "miscellaneous" may include events "new vehicle", "after vehicle service", "hearing a police siren" (or ambulance or firemen), "disgusted when stepping on pond", "new guest", "wishing you depending on a conversation happened in the vehicle" and/or "personal conversation between the driver and the vehicle's digital persona".

The event "new vehicle" may be determined by a first-time setup, and may be associated with the social interpretation "opening a new present", the emotion "surprised", "happy" and/or "energetic", and/or the expression "Yohooo, your new car has arrived. Can't wait to take you for a ride.".

The event "after vehicle service" may be determined by vehicle service logs, and may be associated with the social interpretation "after typically long wait at the service, you want to hear good news that the car is repaired and working fine", the emotion "surprised", "happy" and/or "energetic" (and/or "grateful"), and/or the expression "That was refreshing. Thanks for taking care of me.".

The event "hearing a police siren" may be determined by outer microphones, and may be associated with the social interpretation "being alerted and probably worried and in some occasions up to the extent of being afraid", the emotion "alerted" and/or "afraid", and/or the expression "Oh, I wish all is good.".

The event "disgusted when stepping on pond" may be determined by a 3-axis accelerometer, outer cameras and image processing, and may be associated with the social interpretation "stepping on a pond is never a good incident for adults; it is typically disgusting if the pond is dirty", the emotion "disgusted", and/or the expression "Oh, that was disgusting.".

The event "new guest" may be determined by in-cabin cameras, image processing and a profile selection on an in-vehicle entertainment system, and may be associated with the social interpretation being "hostile at home with a new guest", the emotion "happy" and/or "surprised", and/or the expression "Hi there, welcome on board.".

The event "wishing you depending on a conversation happened in the vehicle" may be determined by in-cabin microphones and a navigation system, and may be associated with the social interpretation being "in the vehicle, the driver is talking on the phone about his board presentation later at work", the emotion "energetic", and/or the expression "We've just arrived. Have a great success with your board presentation today." (wherein the last sentence may require that the vehicle analyses a conversation happening in the vehicle).

The event "personal conversation between the driver and the vehicle's digital persona" may be determined by in-cabin microphones, and may be associated with the social interpretation being "complement a good action", the emotion "shyness", and/or the expression (e.g., after the driver saying "Hi, thanks a lot for taking the time last night to download the last episode on Netflix") "Thanks. It's my pleasure. Let's enjoy the show once we pause on our way to Berlin." (wherein the last sentence may require that the vehicle takes information from the destination on a navigation system or from the saved location on a connected calendar on an in-vehicle entertainment system).

The vehicle's digital persona may be commonly known in the field as digital assistant. The vehicle's digital persona may accordingly change its acoustic and optionally its visual representation as well as its expressions/wording to reflect the social emotion (or combination of emotions) to the user. Known research have been conducted to detect the emotion from the human's voice, which is basically the other way around to what may be intended by the present disclosure. Making use of such research results, the vehicle's digital voice may be controlled (via the processing device of the vehicle) to express a certain emotion.

Possible acoustic parameters to control may be a speech rate, a pitch average, a pitch range, an intensity, a voice quality, a pitch change and/or an articulation.

For the emotion "angered" (e.g., in comparison to the emotion "neutral"), the speech rate may be slightly faster, the pitch average may be very much higher, the pitch range may be much wider, the intensity may be higher, the voice quality may be breathy (and/or a chest voice), the pitch change may be abrupt on stressed syllables, and/or the articulation may be tense.

For the emotion "fearful" (e.g., in comparison to "neutral"), the speech rate may be much faster, the pitch average may be very much higher, the pitch range may be much wider, the intensity may be normal, the voice quality may be an irregular voicing, the pitch change may be normal, and/or the articulation may be precise.

For the emotion "happy" (e.g., in comparison to "neutral"), the speech rate may be faster or slower, the pitch average may be much higher, the pitch range may be much wider, the intensity may be higher, the voice quality may be breathy (and/or with a blaring tone), the pitch change may be smooth with upward inflections, and/or the articulation may be normal.

For the emotion "sad" (e.g., in comparison to "neutral"), the speech rate may be slightly slower, the pitch average may be slightly lower, the pitch range may be slightly narrower, the intensity may be lower, the voice quality may be resonant, the pitch change may have downward inflections, and/or the articulation may be slurring.

Depending on a pre-programmed condition for an event (or a combination of two or more events, e.g., time of the day and weather), a specific emotion combination may be expressed. Accordingly, the digital persona may modify the acoustic signal parameters (e.g., pitch, intensity, etc.), and say some specific and fitting jokes, expressions or words. Typical words may be "Yahoo" when happy, "Oh" when surprised, "Sigh" when frustrated, "Huh" when confused, "Ops" when embarrassed, etc.. All of these contextual, sometimes subtle, changes provide a natural seamless conversation between the vehicle and the occupants.

The user may be given an option on the in-vehicle entertainment systems (i.e., a central information display, front-passenger display and/or rear-seat entertainment display) to skip certain expressions/jokes by the car. The vehicle may be configured to learn from such feedback and modify the user's preferences in the future accordingly. Moreover, positive feedback, e.g., via tapping a "like" on an in-vehicle display or via verbal communication with the digital persona may amplify the experience to the user in the future.

Furthermore, jokes and/or expressions may vary depending on location (e.g., country) and may be updatable via an over-the-air update.

Besides the vehicle itself, the digital persona of the vehicle may also be modified on an app on the user's smartphone. For example, when the user triggers the vehicle heater from his smartphone at home before getting to the garage, the user may observe feedback from the digital persona of the vehicle within the user's smartphone.

Furthermore, a vehicle comprising the control device described herein is provided.

The vehicle may be a motor vehicle. The vehicle may be a passenger car, especially an automobile, or a commercial vehicle, such as a truck.

What is described herein with respect to the control device also applies analogously to the motor vehicle and vice versa.

Furthermore, a method for adjusting a digital assistant of a vehicle in a driving mode and a non-driving mode of the vehicle is provided.

The method comprises receiving sensor data from at least one sensor of the vehicle in the driving mode or the non-driving mode, and determining an event based on the received sensor data using at least one lookup table.

The method comprises retrieving an emotion associated with the determined event from the at least one lookup table, and adjusting at least one acoustic parameter of the digital assistant based on the retrieved emotion.

The method comprises controlling the digital assistant to express the retrieved emotion by providing a voice massage associated with the retrieved emotion, using the adjusted at least one acoustic parameter.

The method may be a computer-implemented method, i.e., one, several or all steps of the method may be executed at least partially by a computer or a device for data processing, optionally the control device.

What is described herein with respect to the control device and the vehicle applies analogously to the method and vice versa.

Furthermore, a computer program is provided. A computer program comprises instructions which, when the computer program is executed by a computer, cause the computer to at least partially execute the method described herein.

A program code of the computer program may be in any code, especially in a code suitable for control systems of motor vehicles.

What is described herein with respect to the control device, the vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described herein.

Thus, a computer-readable medium comprising a computer program as defined herein may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the vehicle, but may also be obtained externally via the Internet or otherwise.

What is described herein with respect to the method, the control device, the computer program and the vehicle also applies analogously to the computer-readable medium and vice versa.

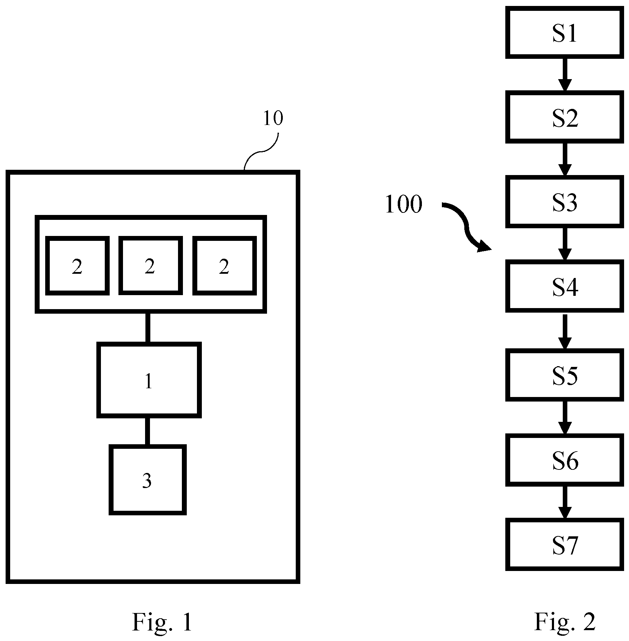

Optional embodiments are described below with reference to Figs. 1 and 2.
- Fig. 1: shows a schematic overview of a vehicle according to an embodiment of the disclosure; and
- Fig. 2: shows a schematic flow diagram of a method according to an embodiment of the disclosure.

The vehicle 10, which is only schematically shown in Fig. 1, comprises the control device 1, the at least one sensor 2, and the input device 3.

For example, the at least one sensor 2 may comprise a 3-axis acceleration sensor, an in-cabin and/or external temperature sensor, a rain sensor, an in-cabin air quality sensor, a sensor associated with a side and/or roof window opener device, a fuel or battery state sensor, a seat belt status sensor, a speed sensor, external cameras, an external microphone, and/or a global positioning system location sensor.

The input device 3 may be an in-cabin touchscreen and/or a mobile communication device.

The control device 1 is configured to communicate and/or exchange signals with the at least one sensor 2 and the input device 3.

The control device 1 is configured to adjust a digital assistant of a vehicle 10 in a driving mode and a non-driving mode of the vehicle 10. In order to do so, the control device 2 is designed to execute the (control) method described below in detail with reference to Fig. 2.

In a first step S1, sensor data from the at least one sensor 2 of the vehicle 10 is received in the driving mode or the non-driving mode of the vehicle 10.

In a second step S2, an event based on the received sensor data using at least one lookup table is determined.

In a third step S3, an emotion associated with the determined event is retrieved from the at least one lookup table.

In a fourth step S4, at least one acoustic parameter of the digital assistant is adjusted based on the retrieved emotion. The at least one acoustic parameter may comprise a speech rate, a pitch, an intensity, a voice quality and/or an articulation.

In addition to the at least one acoustic parameter, at least one visual parameter of the digital assistant may be adjusted based on the retrieved emotion.

In a fifth step S5, the digital assistant is controlled to express the retrieved emotion by providing a voice massage associated with the retrieved emotion, using the adjusted at least one acoustic parameter.

In case that the at least one visual parameter has also been adjusted based on the retrieved emotion, the digital assistant may be controlled to provide the voice massage in combination with a visual representation associated with the retrieved emotion, using the adjusted at least one acoustic parameter and the adjusted at least one visual parameter.

In a sixth step S6, a positive or negative feedback may be received from a user via the input device 3 in response to the provided voice massage.

In a seventh step S7, subsequent adjusting of the digital assistant may be adapted using adaptive machine learning.

### List of reference signs

- 1: control device
- 2: sensor
- 3: input device

- 100: method
- S1-S7: method steps

## Claims

1. Control device (1) for adjusting a digital assistant of a vehicle (10) in a driving mode and a non-driving mode of the vehicle (10), **characterized in that** the control device (1) is configured to:
- receive (S1) sensor data from at least one sensor (2) of the vehicle (10) in the driving mode or the non-driving mode;
- determine (S2) an event based on the received sensor data using at least one lookup table;
- retrieve (S3) an emotion associated with the determined event from the at least one lookup table;
- adjust (S4) at least one acoustic parameter of the digital assistant based on the retrieved emotion; and
- control (S5) the digital assistant to express the retrieved emotion by providing a voice massage associated with the retrieved emotion, using the adjusted at least one acoustic parameter.

2. Control device (1) according to claim 1, **characterized in that**
- the at least one sensor (2) comprises a 3-axis acceleration sensor, an in-cabin and/or external temperature sensor, a rain sensor, an in-cabin air quality sensor, a sensor associated with a side and/or roof window opener device, a fuel or battery state sensor, a seat belt status sensor, a speed sensor, external cameras, an external microphone, and/or a global positioning system location sensor; and
- the at least one lookup table comprises at least one of the following events:
- the vehicle (10) is parked inclined, determined based on sensor data of the 3-axis acceleration sensor and associated with the emotion "irritated";
- raining weather, determined based on sensor data of the in-cabin and/or external temperature sensor and/or rain sensor and associated with the emotion "happy", "sad" and/or "fearful";
- hot weather, determined based on sensor data of the in-cabin and/or external temperature sensor and associated with the emotion "tired" and/or "frustrated";
- bad air quality, determined based on sensor data of the in-cabin air quality sensor and associated with the emotion "tired" and/or "sad";
- open window while raining, determined based on sensor data of the rain sensor and the sensor associated with a side and/or roof window opener device and associated with the emotion "irritated";
- low fuel or battery level, determined by the fuel or battery state sensor and associated with the emotion "tired", "confused" and/or "irritated";
- open seat belt, determined by the seat belt status sensor and associated with the emotion "tired", "confused" and/or "irritated";
- abrupt strong break to stop the vehicle (10), determined based on sensor data of the 3-axis acceleration sensor and associated with the emotion "alerted";
- exceeding speed limit, determined based on a sensor data of the speed sensor in combination with the external cameras and/or and a navigation system and associated with the emotion "alerted" and/or "irritated"; and
- hearing a police siren and/or a horn of another vehicle, determined based on sensor data of the external microphone and associated with the emotion "alerted" and/or "afraid".

3. Control device (1) according to claim 1 or 2, **characterized in that** the at least one acoustic parameter comprises a speech rate, a pitch, an intensity, a voice quality and/or an articulation.

4. Control device (1) according to any of the preceding claims, **characterized in that** the control device (1) is further configured to:
- adjust at least one visual parameter of the digital assistant based on the retrieved emotion, wherein the digital assistant is controlled to provide the voice massage in combination with a visual representation associated with the retrieved emotion, using the adjusted at least one acoustic parameter and the adjusted at least one visual parameter.

5. Control device (1) according to any of the preceding claims, **characterized in that** the control device (1) is further configured to:
- receive (S6) a positive or negative feedback from a user via an input device (3), optionally an in-cabin touchscreen and/or a mobile communication device, in response to the provided voice massage; and
- adapt (S7) subsequent adjusting of the digital assistant using adaptive machine learning.

6. Control device (1) according to any of the preceding claims, **characterized in that** the adjusted digital assistant is provided in a cabin of the vehicle (10) and additionally by a mobile communication device.

7. Vehicle (10), **characterized in that** the vehicle (10) comprises
- the control device (1) according any of claims 1 to 6; and
- the at least one sensor (2).

8. Method (100) for adjusting a digital assistant of a vehicle (10) in a driving mode and a non-driving mode of the vehicle (10), **characterized in that** the method (100) comprises:
- receiving (S1) sensor data from at least one sensor (2) of the vehicle (10) in the driving mode or the non-driving mode;
- determining (S2) an event based on the received sensor data using at least one lookup table;
- retrieving (S3) an emotion associated with the determined event from the at least one lookup table;
- adjusting (S4) at least one acoustic parameter of the digital assistant based on the retrieved emotion; and
- controlling (S5) the digital assistant to express the retrieved emotion by providing a voice massage associated with the retrieved emotion, using the adjusted at least one acoustic parameter.

9. A computer program comprising instructions which, when executed by a computer, cause the computer to carry out the method (100) according claim 8.

10. A computer-readable medium comprising instructions which, when executed by a computer, cause the computer to carry out the method (100) according claim 8.
